# EUROPÄISCHE PATENTSCHRIFT

(11) **EP 2 081 792 B1**
(45) Veröffentlichungstag und Bekanntmachung des Hinweises auf die Patenterteilung: **31.10.2012**
(21) Anmeldenummer: 07801313.3
(22) Anmeldetag: 05.09.2007
(51) Int. Cl.: B60L 13/03, B29B 11/16

(54) **VERKLEIDUNGSELEMENT MIT INTEGRIERTER EMPFANGSEINHEIT ZUR BERÜHRUNGSLOSEN ÜBERTRAGUNG VON ELEKTRISCHER ENERGIE UND VERFAHREN ZU SEINER HERSTELLUNG**
CLADDING ELEMENT WITH AN INTEGRATED RECEPTION UNIT FOR THE CONTACTLESS TRANSFER OF ELECTRICAL ENERGY AND METHOD FOR THE PRODUCTION THEREOF
ÉLÉMENT D'HABILLAGE À UNITÉ DE RÉCEPTION INTÉGRÉE POUR TRANSFERT D'ÉNERGIE ÉLECTRIQUE SANS CONTACT ET PROCÉDÉ PERMETTANT DE LE PRODUIRE

(30) Priorität: 11.10.2006 DE 102006048831
(43) Veröffentlichungstag der Anmeldung: 29.07.2009
(73) Patentinhaber: ThyssenKrupp Transrapid GmbH, 34127 Kassel (DE)
(72) Erfinder: HAHN, Wolfgang, 34125 Kassel (DE); ZHENG, Qinghua, 82024 Taufkirchen (DE); DIEKMANN, Andreas, 81669 München (DE)
(74) Vertreter: Lorenz, Bernd Ingo Thaddeus
(86) Internationale Anmeldenummer: PCT/DE2007/001576
(87) Internationale Veröffentlichungsnummer: WO 2008/043327

(56) Entgegenhaltungen:
- EP-A- 0 549 110
- WO-A-2005/090112
- JP-A- 3 178 505
- JP-A- 58 135 619

## Beschreibung

Die Erfindung betrifft ein Verkleidungselement der im Oberbegriff des Anspruchs 1 angegebenen Gattung und ein Verfahren zu seiner Herstellung nach dem Oberbegriff des Anspruchs 11.

Verkleidungselemente dieser Art sind insbesondere bei Magnetschwebefahrzeugen bekannt (DE 10 2004 056 439 A1). Die eine Empfängerspule aufweisende Empfangseinheit dient zur berührungslosen, induktiven Übertragung elektrischer Energie von einem Fahrweg auf ein Fahrzeug. Zu diesem Zweck ist am Fahrweg wenigstens ein an eine Spannungsquelle angeschlossener, als Sendespule ausgebildeter Primärleiter und am Fahrzeug wenigstens eine sekundäre Empfängerspule vorgesehen. Die Empfangseinheit ist einschließlich zugehöriger Kontaktierungselemente in Form von Steckverbindern od. dgl. vorzugsweise an einem schalenförmigen Verkleidungselement montiert bzw. in dieses integriert, das einen Magnetrückenkasten auf einer dem Fahrweg zugewandten Seite abdeckt. In dem Magnetrückenkasten, der über Gestellbügel mit einem Untergestell bzw. Wagenkasten des Fahrzeugs verbunden ist, sind unter anderem Tragmagnete für das Magnetschwebefahrzeug und zu deren Steuerung benötigte Einrichtungen untergebracht, die mit dem von der Empfängerspule gelieferten elektrischen Strom betrieben werden können. Auf diese Weise entsteht eine autonome Baueinheit für die Funktion "Tragen".

Ein Verkleidungselement mit einer in dieses integrierten Empfangseinheit, die eine Empfängerspule zur berührungslosen Übertragung von elektrischer Energie und eine Vielzahl von der Empfängerspule zugeordneten, zur Konzentration der Feldstärke bestimmten Flußleitelementen enthält, die aus einem Material mit im Vergleich zu Luft hoher Permeabilität bestehen ist aus WO 2005/090112 A bekannt.

Zur Verbesserung der magnetischen Kopplung zwischen dem Primärleiter und der Empfängerspule und zur Vermeidung von Wirbelstromverlusten ist die Empfängerspule auf ihrer vom Primärleiter abgewandten Seite mit Mitteln zur Konzentration der vom Primärleiter erzeugten magnetischen Feldlinien versehen. Diese Mittel enthalten Flussleitelemente in Form von Streifen und deren Enden verbindenden Verbindungselementen aus einem Material mit hoher Permeabilität und hohem elektrischen Widerstand, vorzugsweise aus einem Ferrit, insbesondere einem Weichferrit. Die Streifen und Verbindungselemente werden durch Kleben oder sonstwie zu einem an die Empfängerspule anzulegenden Gitterrahmen verbunden.

Die Herstellung von Flußleitelementen aus einem Material wie Ferrit od. dgl. erfolgt durch Pressen und nachfolgendes Sintern eines aus diesem Material hergestellten Pulvers. Die dadurch erhaltenen Flussleitelemente sind vergleichsweise spröde, mechanisch empfindlich und schlecht bearbeitbar. Außerdem ist das Zusammenfügen der Flußleitelemente zu einem Gitterrahmen mit einem hohen Arbeitsaufwand verbunden.

Aus denselben Gründen ist die übliche Befestigung der Empfängerspule und der Flußleitelemte an dem Verkleidungselement durch Schrauben, Kleben od. dgl. nicht einfach. Außerdem besteht die Gefahr, daß die Flußleitelemente aufgrund der beim Betrieb des Magnetschwebefahrzeugs auftretenden mechanischen Schwingungen und Erschütterungen zerstört werden oder sich lösen, was unerwünschte Wartungs- und Reparaturarbeiten erforderlich macht.

Ausgehend davon liegt der Erfindung das technische Problem zugrunde, das Verkleidungselement der eingangs bezeichneten Gattung so auszubilden, daß seine Herstellung vereinfacht wird, die Flußleitelemente sicher in dem Verkleidungselement integriert sind und daher selbst dann, wenn sie aus einem spröden, leicht brechbaren Material bestehen, eine hohe Standzeit erzielt wird.

Zur Lösung dieses Problems dienen die kennzeichnenden Merkmale der Ansprüche 1 und 11.

Die Erfindung bringt den Vorteil mit sich, daß eine Empfangseinheit, die aus dem Grundkörper mit den Flußleitelementen und der Empfängerspule besteht, vorzugsweise vollständig in das aus einem faserverstärkten Kunststoff hergestellte Verkleidungselement eingebettet ist. Zusätzliche Mittel zur Befestigung der Empfangseinheit am oder im Verkleidungselement sind daher nicht erforderlich. Außerdem sind die Flußleitelemente aufgrund ihrer Anordnung in dem Grundkörper nicht nur positioniert, sondern auch sicher gehalten und vor mechanischen Erschütterungen geschützt. Das gilt insbesondere dann, wenn der Grundkörper, was bevorzugt wird, aus einem Schaumstoff mit dämpfender Wirkung hergestellt wird.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 schematisch einen Teilschnitt durch ein übliches Magnetschwebefahrzeug im Bereich eines mit einem Langstator versehenen Fahrwegs;
Fig. 2 eine schematische, perspektivische und stark vergrößerte Darstellung eines Teils einer Empfangseinheit;
Fig. 3 schematisch einen Querschnitt durch die Empfangseinheit und den Primärleiter nach Fig. 2;
Fig. 4 eine perspektivische Darstellung eines zur Herstellung der Empfangseinheit nach Fig. 2 und 3 verwendbaren, erfindungsgemäßen Grundkörpers;
Fig. 5 und 6 vergrößerte Schnitte längs der Linien V - V und VI - VI der Fig. 4;
Fig. 7 einen Schnitt durch den Grundkörper entsprechend Fig. 5 nach dem Auflegen einer Empfängerspule und dem Einlegen von Flußleitelementen;
Fig. 8 in auseinander gezogenen, perspektivischen Ansichten schematisch die Entstehung einer bei der Herstellung der Empfangseinheit verwendbaren, erfindungsgemäßen Baueinheit.
Fig. 9 eine perspektivische Darstellung einer zur Aufnahme des Grundkörpers nach Fig. 7 und 8 bestimmten Außenschale eines erfindungsgemäßen Verkleidungselements;
Fig. 10 eine Querschnitt etwa längs der Linie X - X der Fig. 9 durch ein komplettes erfindungsgemäßes Verkleidungselement; und
Fig. 11 schematisch eine Vorrichtung zur Herstellung des erfindungsgemäßen Verkleidungselements nach Fig. 10.

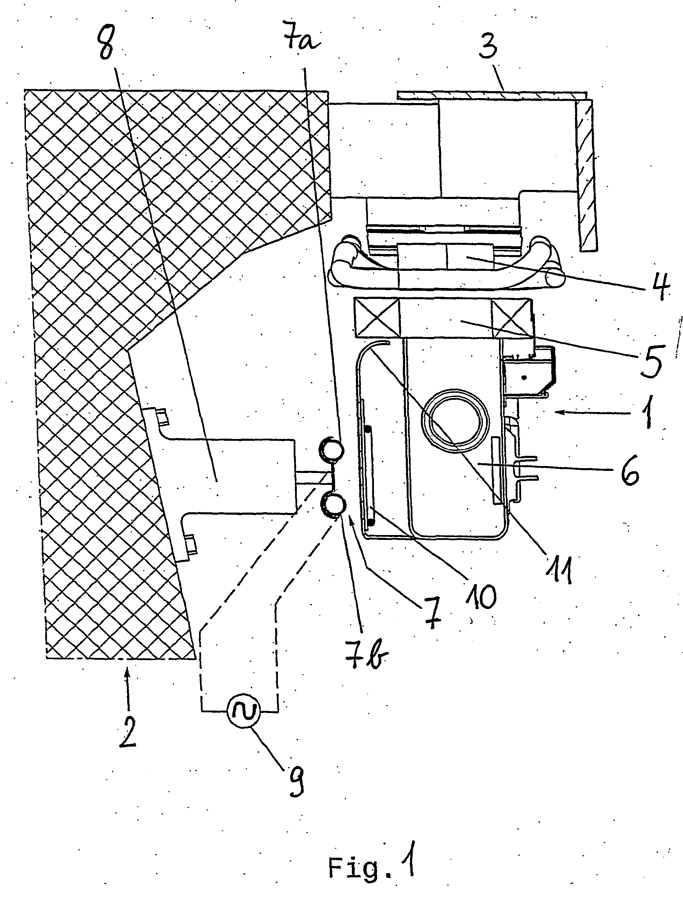

Fig. 1 zeigt schematisch einen Querschnitt durch ein Magnetschwebefahrzeug 1, das in üblicher Weise auf einem in Längsrichtung einer Trasse verlaufenden Fahrweg fahrbar montiert ist, der aus Stahl und/oder Beton hergestellte Träger 2 und auf diesen montierte Fahrwegplatten 3 enthält. Der Antrieb des Magnetschwebefahrzeugs 1 erfolgt mittels eines Langstatormotors, der unterhalb der Fahrwegplatte 3 befestigte, in deren Längsrichtung aufeinander folgende Statorpakete 4 aufweist. Das eigentliche Erregerfeld des Langstatormotors wird durch wenigstens eine mit Tragmagneten versehene Magnetanordnung erzeugt, die den in Fig. 1 nach unten offenen Nuten der Statorpakete 4 zugewandte Magnetpole aufweist. Der Tragmagnet 5 stellt nicht nur das Erregerfeld bereit, sondern erfüllt auch die Funktion des Tragens und Schwebens, indem er beim Betrieb des Magnetschwebefahrzeugs 1 einen vorgegebenen Spalt zwischen dem Tragmagneten 5 und den Statorpaketen 4 aufrecht erhält. Die die Tragmagnete 5 enthaltende Magnetanordnung ist im übrigen in einem Magnetrückenkasten 6 untergebracht, der über seitlich angeordnete Gestellbügel am Magnetschwebefahrzeug 1 befestigt ist.

Längs des Fahrwegs ist ein als Sendespule ausgebildeter Primärleiter 7 vorgesehen, der vorzugsweise je einen hin- und herlaufenden Leitungsabschnitt 7a, 7b enthält und sich zweckmäßig über die gesamte Länge des Fahrwegs erstreckt. Die beiden Leitungsabschnitte 7a, 7b sind z. B. mittels einer aus einem Isolator bestehenden Halterung 8 am Träger 2 befestigt. Der Primärleiter 7 liegt außerdem an einer nur schematisch dargestellten, vorzugsweise hochfrequenten Stromquelle 9 von z. B. 200 A.

Am Magnetschwebefahrzeug 1 ist eine Empfangseinheit mit einer Empfängerspule 10 montiert. Diese ist vorzugsweise so ausgebildet, dass sie den Primärleiter 7 nicht umgreift, sondern diesem mit einem geringen Abstand gegenübersteht. Die Empfängerspule 10 besteht vorzugsweise aus einer Mehrzahl von parallelen Leitern, die so relativ zum Primärleiter 7 angeordnet sind, dass sie von den von diesem bzw. den Leitungsabschnitten 7a, 7b erzeugten, magnetischen Feldlinien durchdrungen werden und an ihren nicht dargestellten Anschlussenden der vom Primärleiter 7 gelieferte Strom von ca. 200 A ausgekoppelt werden kann. Die beiden nicht gezeigten Anschlussenden der Empfängerspule 10 werden in bekannter Weise z. B. mit einem Spannungswandler verbunden, der ein Bestandteil einer üblichen Energieversorgungseinheit ist, die das Magnetschwebefahrzeug 1 mit der für seinen Betrieb erforderlichen elektrischen Energie versorgt. Dabei ist klar, dass zweckmäßig an beiden Seiten des Trägers 2 entsprechende Primärleiter 7 verlegt werden, wenn die Magnetschwebefahrzeuge 1 an beiden Längsseiten mit Tragmagneten 5 versehen sind, und dass in Längsrichtung der Magnetschwebefahrzeuge 1 so viele Empfangseinheiten vorgesehen werden, wie zu ihrem Betrieb erforderlich oder aus Redundanzgründen erwünscht sind.

Die Empfängerspule 10 wird vorzugsweise als vorgefertigte Baugruppe gemeinsam mit den notwendigen Kontaktierungselementen, z. B. Steckverbindern, hergestellt und am Magnetrückenkasten 6 montiert. Besonders zweckmäßig ist es, die Empfängerspule 10 an oder in einem schalenförmigen Verkleidungselement 11 unterzubringen, das an einer dem Primärleiter 7 zugewandten Rückseite des Magnetrückenkastens 6 befestigt ist.

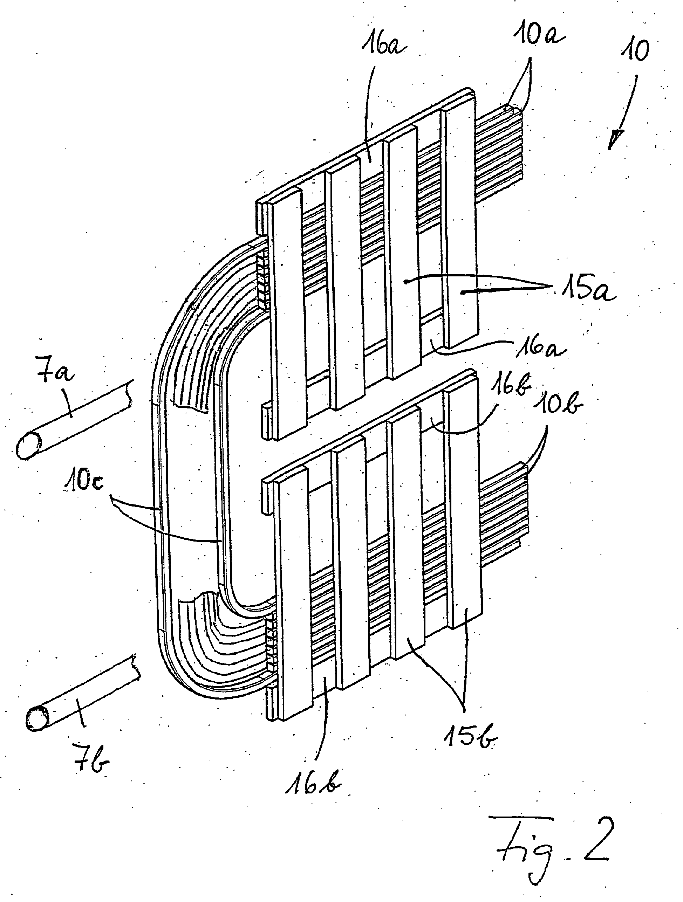

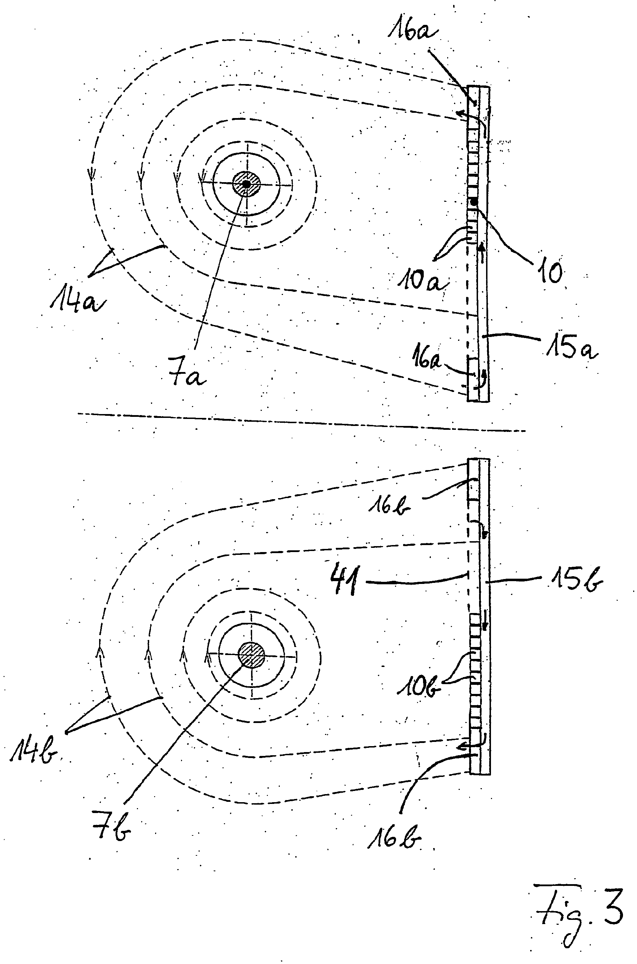

Die Empfängerspule 10 ist vorzugsweise nach Art einer sog. Lagenwicklung ausgebildet. Sie enthält, wie Fig. 2 zeigt, eine Mehrzahl von in einer Ebene liegenden Lagen. Die einzelnen Lagen sind vorzugsweise aus einem Leiter mit rundem oder quadratischem Querschnitt hergestellt und weisen parallel zueinander und längs der Magnetanordnung erstreckte, im wesentlichen geradlinige, erste bzw. zweite Längsabschnitte 10a, 10b sowie deren Enden verbindende Wicklungsköpfe 10c auf. Die Längsabschnitte 10a, 10b verlaufen parallel zu den Leitungsabschnitten 7a, 7b des Primärleiters 7 und dienen der Spannungserzeugung. Dabei sind die ersten Längsabschnitte 10a dem Leitungsabschnitt 7a und die zweiten Längsabschnitte 10b dem Leitungsabschnitt 7b des Primärleiters 7 derart zugeordnet, dass die Leitungsabschnitte 7a, 7b jeweils etwa in der Mitte des von den zugeordneten Längsabschnitten 10a, 10b gebildeten Lagenteils angeordnet sind, wie insbesondere Fig. 3 zeigt. Demgegenüber verlaufen die Leiter der Empfängerspule 10 im Bereich der Wicklungsköpfe 10c im wesentlichen senkrecht zu den Leitungsabschnitten 7a bzw. 7b.

Zur Erhöhung der magnetischen Kopplung zwischen dem Primärleiter 7 und der Empfängerspule 10 und zur Vermeidung von Wirbelstromverlusten weist die Empfangseinheit ferner an einer vom Primärleiter 7 abgewandten Seite der Empfängerspule 10 ein Mittel zur Konzentration der vom Primärleiter 7 erzeugten Feldstärke auf, wie schematisch in Fig. 3 durch magnetische Feldlinien 14a, 14b angedeutet ist. Dieses Mittel enthält Flußleitelemente, die aus einem Material mit hoher Permeabilität und einem hohen spezifischen elektrischen Widerstand bestehen. Ein besonders bevorzugtes Material für diesen Zweck ist Ferrit, insbesondere Weichferrit, das allerdings wegen seiner Herstellung aus ferritmagnetischen Pulvern durch Pressen und nachfolgendes sintern vergleichsweise spröde, mechanisch empfindlich und daher schlecht bearbeitbar ist. Die Flußleitelemente werden daher bisher aus vielen, vergleichsweise kleinen Materialstreifen und Verbindungselementen zusammengesetzt, die durch Kleben oder sonstwie zu Gitterrahmen miteinander verbunden werden.

Bei einer ebenfalls aus Fig. 2 und 3 ersichtlichen Konstruktion ist z. B. auf einer vom Leitungsabschnitt 7a abgewandten Seite der Empfängerspule 10 eine Mehrzahl von ersten Materialstreifen 15a vorgesehen, die im wesentlichen senkrecht zum Leitungsabschnitt 7a und parallel zu der von den Längsabschnitten 10a gebildeten Wicklungsebene angeordnet sind. An einer vom Leitungsabschnitt 7b abgewandten Seite der Empfängerspule 10 ist bei entsprechender Anordnung eine Mehrzahl von zweiten Materialstreifen 15b vorgesehen, die zweckmäßig in derselben Ebene wie die ersten Materialstreifen 15a liegen. Beide Materialstreifen 15a, 15b haben eine Länge, die etwas größer ist, als der Höhe der von den Längsabschnitten 10a, 10b gebildeten Lagenteile entspricht, ohne dass sie sich mit den einander zugewandten Enden überlappen. Die einzelnen Materialstreifen 15a, 15b sind jeweils gitterartig und mit vorgewählten Abständen parallel zueinander angeordnet.

Die Enden der ersten Materialstreifen 15a sind durch erste Verbindungselemente 16a miteinander verbunden, die im wesentlichen parallel zum Leitungsabschnitt 7a angeordnet sind. Entsprechend sind die Enden der zweiten Materialstreifen 15b durch zweite Verbindungselemente 16b verbunden. Dadurch entstehen nach Art von Gitterrahmen ausgebildete Bauelemente.

Sowohl die Materialstreifen 15a, 15b als auch die Verbindungselemente 16a und 16b bestehen vorzugsweise aus einem Ferrit. Sie sind außerdem zweckmäßig dicht hinter den Längsabschnitten 10a, 10b und so angeordnet, dass sie eine Konzentration der von den Leitungsabschnitten 7a, 7b erzeugten Feldlinien 14a bzw. 14b bewirken, wie in Fig. 3 schematisch angedeutet ist. Dabei ist in Fig. 3 angenommen, dass der Leitungsabschnitt 7a momentan in einer aus der Zeichenebene heraustretenden Richtung und der Leitungsabschnitt 7a momentan in einer in die Zeichenebene eintretenden Richtung vom Strom durchflossen ist. Wegen der hohen Permeabilität der Materialstreifen 15a, 15b werden die Feldlinien 14a, 14b unmittelbar hinter den Leitungsabschnitten 10a, 10b geschlossen, wie in Fig. 3 schematisch durch Pfeile angedeutet ist, wodurch die magnetische Kopplung stark erhöht wird. Gleichzeitig wird vermieden, dass sich größere Wirbelstromverluste ergeben, da die Materialstreifen 15a, 15b und Verbindungselemente 16a, 16b die hinter ihnen liegenden Teile des Magnetrückenkastens 6 wegen ihrer hohen Permeabilität magnetisch abschirmen. Schließlich sollen die Verbindungselemente 16a, 16b eine weitgehend gleichförmige Verteilung des magnetischen Flusses innerhalb der Gitterrahmenstruktur bewirken. Daher ist die Länge der Materialstreifen 15a, 15b und der Verbindungselemente 16a, 16b vorzugsweise so gewählt, dass möglichst viele der Feldlinien 14a, 14b gesammelt bzw. konzentriert werden.

Die Verbindungselemente 16a, 16b werden vorzugsweise auf den den Leitungsabschnitten 7a, 7b zugewandten Seiten der Materialstreifen 15a, 15b befestigt. Dadurch ergibt sich der Vorteil, dass sie im wesentlichen in derselben Ebene wie die Längsabschnitte 10, 10b der Empfängerspule 10 zu liegen kommen, wie insbesondere Fig. 3 zeigt. Dadurch entsteht für sie kein zusätzlicher Raumbedarf, insbesondere wenn ihre Dicke, was in magnetischer Hinsicht ausreicht, etwa gleich der Dicke der Längsabschnitte 10a, 10b ist.

Empfangseinheiten der beschriebenen Art sind aus dem Dokument DE 10 2004 056 439 A1 bekannt, das hiermit zur Vermeidung weiterer Wiederholungen durch Referenz zum Gegenstand der vorliegenden Offenbarung gemacht wird.

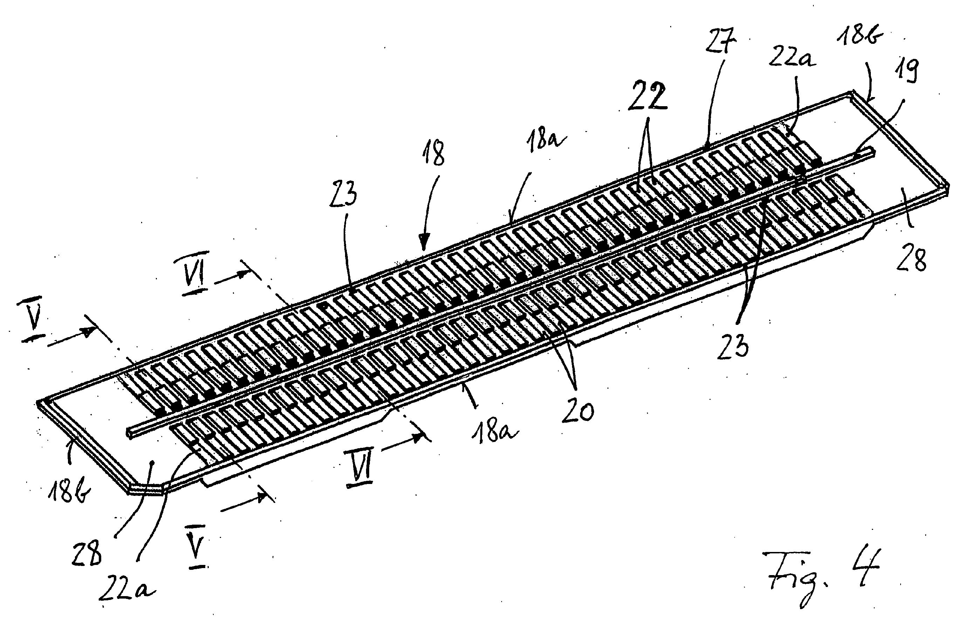

Zur Vereinfachung der Herstellung des aus den Streifen 15a, 15b und Verbindungselementen 16a, 16b bestehenden Gitterrahmens wird erfindungsgemäß von einem Grundkörper 18 (Fig. 4) ausgegangen, der überall dort, wo die Flußleitelemente zu liegen kommen sollen, mit Vertiefungen in Form von Nuten od. dgl. versehen ist und daher als ordnendes Hilfsmittel angesehen werden kann. Zwischen den Vertiefungen stehen bleibende Stege werden so ausgebildet, dass ihre Oberflächen zumindest teilweise auch als Auflageflächen für die Empfängerspule 10 dienen können.

Wie aus Fig. 4 bis 7 ersichtlich ist, wird der Grundkörper 18 im Ausführungsbeispiel aus einer ursprünglich planparallelen Platte hergestellt, die wie die Empfängerspule 10 eine im wesentlichen rechteckige Außenkontur besitzt und demgemäß zwei lange, parallel zueinander angeordnete Längsseiten 18a und zwei kurze, senkrecht dazu angeordnete, ebenfalls im wesentlichen parallele Stirnseiten 18b aufweist. Außerdem ist der Grundkörper 18 durch einen parallel zu den Längsseiten 18a verlaufenden Mittelsteg 19 in zwei im wesentlichen spiegelsymmetrisch zu diesem ausgebildete Hälften unterteilt.

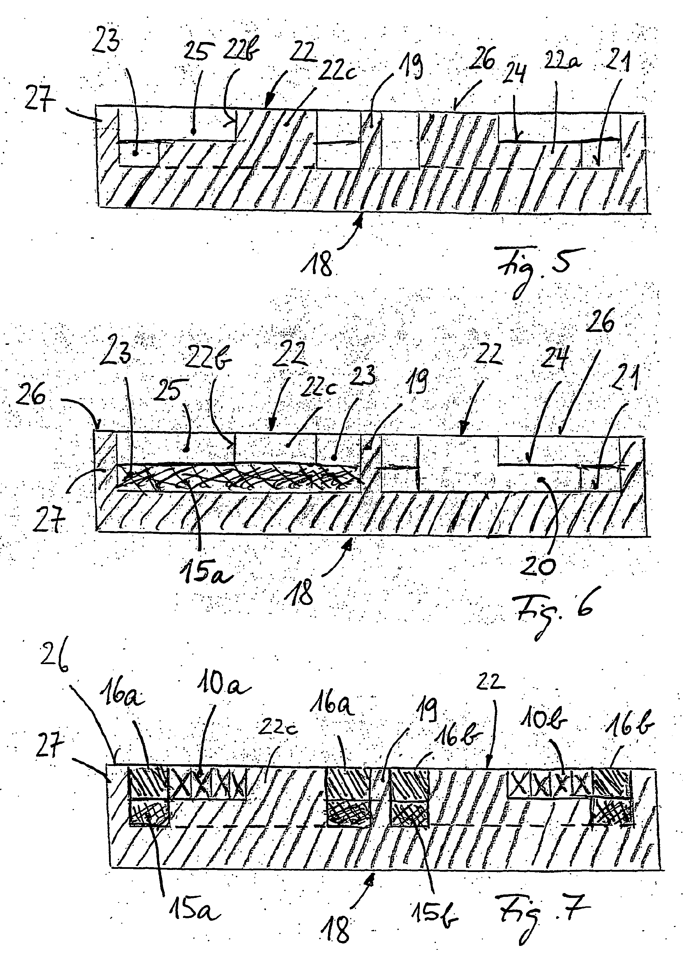

Zur Aufnahme der Streifen 15a, 15b (Fig. 2) wird jede Hälfte des Grundkörpers 18 von seiner in Fig. 4 bis 7 oberen Breitseite her mit einer Vielzahl von ersten Vertiefungen 20 versehen, deren untere Begrenzungen bzw. Böden in Fig. 5 und 7 gestrichelt dargestellt sind. Die Vertiefungen 20 reichen bis zu einer ersten Ebene 21 des Grundkörpers 18 und sind einerseits senkrecht zu den Längsseiten 18a und zum Mittelsteg 19, andererseits parallel zueinander angeordnet. Die Zahl und die Größe dieser Vertiefungen 20 entspricht der Zahl und der Größe der anzubringenden Streifen 15a und 15b.

Zwischen den Vertiefungen 20 stehen bleibende Stege 22 werden gemäß Fig. 5 und 6 an ihren an die Längsseiten 18a und den Mittelsteg 19 grenzenden Enden mit zweiten Vertiefungen 23 versehen, die ebenfalls bis zur ersten Ebene 21 reichen und somit mit den ersten Vertiefungen 20 verbunden sind.

Bei einem bisher für am besten gehaltenen und in Fig. 4 bis 7 dargestellten Ausführungsbeispiel werden nach Ausbildung der zweiten Vertiefungen 23 verbleibende und den Längsseiten 18a zugewandte Teile 22a der Stege 22 (Fig. 5) in ihrer Höhe reduziert, so dass sie nur bis zu einer zweiten Ebene 24 reichen, die von der ersten Ebene 21 einen Abstand hat, der der Dicke der Streifen 15a und 15b entspricht. Dadurch entstehen dritte Vertiefungen 25, die zur Aufnahme der Längsabschnitte 10a, 10b der Empfängerspule 10 dienen. Die Vertiefungen 25 erstrecken sich quer zu den Längsseiten 18a des Grundkörpers 18 von den zweiten Vertiefungen 23 bis zu Stufen 22b der Stege 22 und haben in dieser Erstreckungsrichtung eine Länge, die der Breite der einzulegenden Empfängerspule 10 entspricht, deren Längsabschnitte 10a, 10b in Fig. 7 sichtbar sind.

Die Oberflächen von nicht in ihrer Höhe reduzierten Teilen 22c der Stege 22 liegen in einer dritten Ebene 26 des Grundkörpers 18. In dieser Ebene 26, die von der zweiten Ebene 24 einen Abstand hat, die im wesentlichen der Dicke der Empfängerspule 10 entspricht, liegen auch die Oberflächen eines rundum laufenden Randabschnitts 27 des Grundkörpers 18 sowie des Mittelstegs 19.

In je einem an die Stirnseiten 18b grenzenden Bereich ist der Grundkörper 18 mit weiteren, bis zur zweiten Ebene 24 reichenden Vertiefungen 28 (Fig. 4) versehen. Diese sind so groß ausgebildet, dass sie die Wickelköpfe 10c (Fig. 2) der Empfängerspule 10 aufnehmen können. Außerdem ist die Höhe der verschiedenen Lagen der Empfängerspule 10 so groß gewählt, dass diese, nach dem sie auf die oberen Oberflächen bzw. Böden der Vertiefungen 25 und 28 aufgelegt worden ist, bündig mit der dritten Ebene 26 abschließt, wie Fig. 7 zeigt.

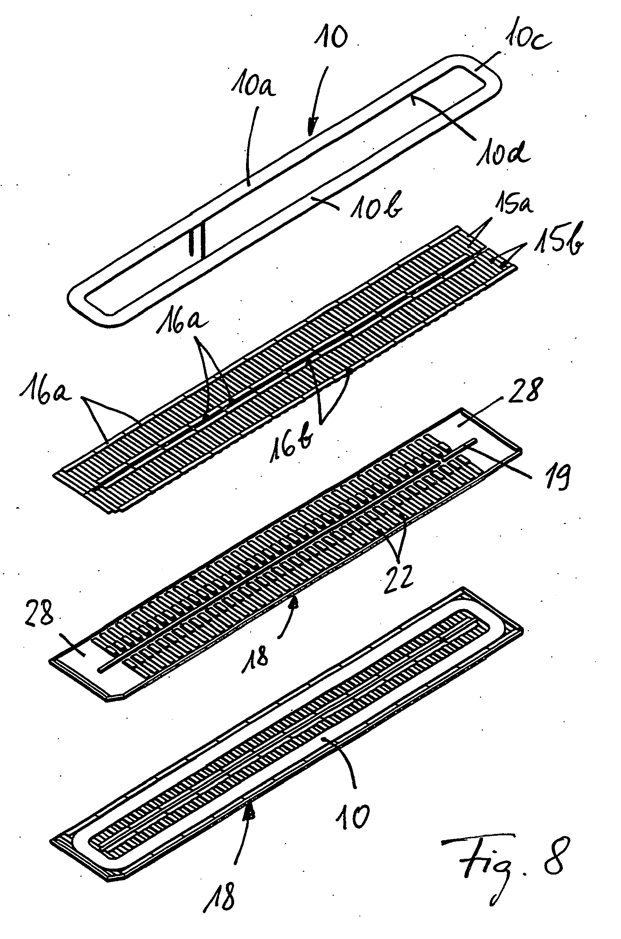

Die Herstellung der Empfangseinheit erfolgt zweckmäßig auf die in Fig. 8 dargestellte Weise wie folgt:
Es wird zunächst der Grundkörper 18 mit den aus Fig. 4 bis 6 ersichtlichen Vertiefungen 20, 23, 25 und 28 und Stegen 22 versehen, indem eine planparallele Platte z. B. einer spanabhebenden Bearbeitung, insbesondere verschiedenen Frässchritten, unterworfen wird. Die Vertiefungen 25 und 28 bilden dann einen zur Aufnahme der Empfängerspule 10 bestimmten Raum. Dieser Raum ist so bemessen, dass die Empfängerspule 10 beim Einlegen in den Grundkörper 18 mit ihrer inneren Kontur 10d einerseits mit der Stufe 22b zur Anlage kommt (Fig. 7) und dadurch in Querrichtung des Grundkörpers 18 positioniert wird, andererseits an die freien Enden des Mittelstegs 19 anstößt und damit in Längsrichtung des Grundkörpers 18 ausgerichtet wird. Dieser Zustand ist im untersten Bild der Fig. 8 dargestellt. Mit anderen Worten bilden die Stufen 22b und die Enden des Mittelstegs 19 Anschlag- und Positionierungsmittel zur exakten Positionierung der Empfängerspule 10 im Grundkörper 18.

In einem weiteren Verfahrensschritt werden die Flußleitelemente 15a, 15b und 16a, 16b vorbereitet. Sie werden z.B. durch Pressen und nachfolgendes Sintern aus einem Material wie Ferrit, insbesondere einem Weichferrit hergestellt, wobei diese Herstellung auch ganz unabhängig von der Herstellung des erfindungsgemäßen Verkleidungselements vorgenommen werden kann. Insbesondere werden entsprechend Fig. 2 einerseits die Materialstreifen 15a, 15b so hergestellt, daß sie genau in die ersten Vertiefungen 20 passen, die im rechten Teil der Fig. 6 sichtbar sind. Andererseits werden die Verbindungselemente 16a, 16b so hergestellt, daß sie genau in die zweiten Vertiefungen 23 passen, die aus Fig. 5 und 6 ersichtlich sind. Dabei können um einen frühzeitigen Bruch der Verbindungselemente 16a, 16b zu vermeiden, einzelne Stücke davon hergestellt werden, die analog zu Fig. 2 eine solche Länge aufweisen, daß sie sich nur über eine kleine Anzahl der Materialstreifen 15a, 15b erstrecken (vgl. auch Fig. 8) und im wesentlichen nur so lang wie die Materialstreifen 15a, 15b sind. Anschließend können die Materialstreifen 15a, 15b und Verbindungselemente 16a, 16b entsprechend Fig. 8, zweites Bild von oben, mit Hilfe eines Montageklebers od. dgl. zu einem Gitterrahmen verbunden werden, der genau in die Vertiefungen 20 und 23 des Grundkörpers 18 paßt.

Unabhängig davon, ob die Flußleitelemente 15a, 15b und 16a, 16b zu einem derartigen Gitterrahmen zusammengefaßt sind oder nicht, werden sie jetzt in die Vertiefungen 20, 23 des Grundkörpers 18 eingelegt. Wie schematisch im linken Teil der Fig. 6 dargestellt ist, kommen die Materialstreifen 15a und 15b jeweils in einer Vertiefung 20 zu liegen und füllen diese auf der ganzen Länge aus. Dagegen werden die Verbindungselemente 16a und 16b, wie Fig. 7 zeigt, in den Vertiefungen 23 des Grunkörpers 18 angeordnet, wobei sie sich auf die Enden der Materialstreifen 15a, 15b auflegen. Wie im Fall des Gitterrahmens kann auch hier mit einem Montagekleber od. dgl. eine Verbindung der Verbindungselemente 16a, 16b mit den Materialstreifen 15a, 15b vorgenommen werden.

Im Anschluß an das Einlegen der Flußleitelemente 15a, 15b, 16a, 16b wird die Empfängerspule 10, wie Fig. 7 und 8 (unterstes Bild) zeigen, so auf den Grundkörper 18 aufgelegt, daß ihre Längsabschnitte 10a, 10b in den dritten Vertiefungen 25 und damit auf den Oberflächen der Stegteile 22a und ihre Wicklungsköpfe 10c in den Vertiefungen 28 zu liegen kommen.

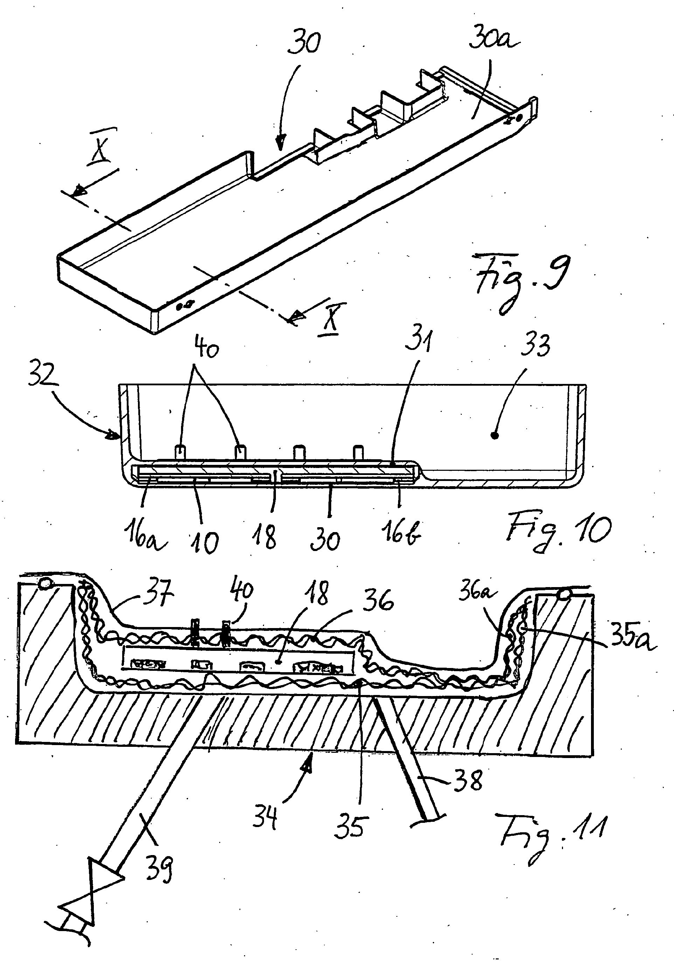

Nach einem ersten Ausführungsbeispiel des erfindungsgemäßen Herstellungsverfahrens wird die aus dem Grundkörper 18, den Flußleitelementen 15a, 15b und 16a, 16b sowie der Empfängerspule 10 bestehende, noch lose zusammenhängende Empfangseinheit jetzt in eine vorher vorbereitete, aus einem faserverstärkten Kunststoff hergestellte Außenschale 30 (Fig. 9) eines dem Verkleidungselement 11 in Fig. 1 entsprechenden Verkleidungselements eingelegt. Diese Außenschale 30 bildet im Ausführungsbeispiel ein die Außenkontur des Verkleidungselements festlegendes Bauteil und gleichzeitig eine Form zur Herstellung des kompletten Verkleidungselements. Die vorher vorbereitete Empfangseinheit wird nun in die Außenschale 30 zweckmäßig so eingelegt, daß die Empfängerspule 10 auf ihrem Boden 30a zu liegen kommt. Anschließend wird die Empfangseinheit mit einem faserverstärkten Kunststoff umhüllt. Dadurch entsteht eine fest mit der Außenschale 30 verbundene, in Fig. 10 gezeigte Innenschale 31, die mit der Außenschale 30 fest verbunden ist, während gleichzeitig die Empfangseinheit sandwichartig zwischen den beiden Schalen 30, 31 angeordnet ist. Insgesamt wird somit ein Verkleidungselement 32 erhalten, in das die Empfangseinheit unverlierbar und im wesentlichen auch unzerstörbar integriert ist.

Das Verkleidungselement 32 kann außer der Empfangseinheit weitere Bauelemente enthalten. Dazu gehört z.B. ein nicht gezeigter, abstimmbarer Kondensatorblock, der mit der Empfängerspule 10 verbunden wird, mit dieser einen Schwingkreis bildet und dazu dient, diesen Schwingkreis auf eine Resonanzfrequenz von z.B. 20 kHz abzustimmen, die der Frequenz des Stroms des Primärleiters 7 (Fig. 1) entspricht. Außerdem können in einem Raum 33 des Verkleidungselements 32 weitere Bauelemente untergebracht werden, die zum Betrieb der Tragmagnete 5 (Fig. 1) nützlich oder erforderlich sind. Außerdem kann der Grundkörper 18, was nicht näher dargestellt ist, mit den erforderlichen Anschlußkontakten für die Empfängerspule 10 versehen sein, wobei natürlich auch an dem Grundkörper 18 zusätzliche Bauelemente eingebracht werden könnten.

Bei einem zweiten Ausführungsbeispiel der Erfindung wird zur Herstellung des Verkleidungselements 32 eine Form 34 (Fig. 11) verwendet, deren Kavität die Außenkontur des Verkleidungselements 32 bzw. der Außenschale 30 festlegt. In diese Form 34 wird zunächst zwecks Herstellung der Außenschale 30 wenigstens eine erste, vorzugsweise in trockem Zustand befindliche Fasermatte 35 eingelegt. Auf diese wird dann die entsprechend Fig. 8 vorbereitete Empfangseinheit aufgelegt, worauf auf dieser wenigstens eine zweite, vorzugsweise ebenfalls trockene Fasermatte 36 aufgelegt wird. Dabei wird die Anordnung vorzugsweise so getroffen, daß die beiden Fasermatten 35, 36 aufeinander liegende, rundumlaufende Randabschnitte 35a, 36a aufweisen, so daß die Empfangseinheit allseitig von den Fasermatten 35, 36 umgeben ist.

Die Form 34 wird nun auf ihrer Oberseite mit einer ihre Kavität abdeckenden und abdichtenden Folie 37 od. dgl. belegt und durch einen bis zum Boden der Kavität ragenden Kanal 38 an eine nicht gezeigte Vakuumpumpe angeschlossen. Dadurch werden die Fasermatten 35, 36 und der Grundkörper 18 mit seinen Bauteilen eng gegen den Boden der Kavität und gegeneinander gepreßt und die Randabschnitte 35a, 36a zusammengeführt. Danach wird durch einen Angußkanal 39, der z.B. ebenfalls am Boden der Form 34 mündet, ein Gießharz in die Kavität gedrückt, um die Fasermatten 35, 36 mit dem Gießharz zu imprägnieren bzw. zu durchtränken, wie dies bei der Herstellung von Formteilen aus faserverstärkten Kunststoffen allgemein üblich ist.

Das Gießharz wird dann, ggf. bei erhöhter Temperatur, ausgehärtet bzw. der Aushärtung überlassen, worauf die Folie 37 abgezogen und das fertige Verkleidungselement aus der Form 34 herausgenommen wird. Zur Erleichterung dieses Vorgangs kann die Form 34 vorher mit einem Trennmittel bestrichen und zwischen den beiden Fasermatten 35, 36 wenigstens ein Einsatzteil 40 (vgl. auch Fig. 10) vorgesehen werden, das ein leichtes Anheben des fertigen Verkleidungselements ermöglicht. Das der Form 34 entnommene Verkleidungselement entspricht wiederum dem Verkleidungselement 11 in Fig. 1.

Ein Vorteil des beschriebenen Verfahrens besteht darin, daß der Boden der Außenschale 30 vergleichsweise dünn ausgebildet und die Empfängerspule 10 daher sehr nah am Primärleiter 7 angeordnet werden kann (Fig. 1), was ihren Wirkungsgrad vergrößert. Außerdem bildet der Grundkörper 18 analog zu einem Doppel-T-Träger den Mittelsteg zwischen den beiden Schalen 30 und 31 und dadurch ein Distanzierungselement, das eine hohe Steifigkeit des Verkleidungselements sicherstellt.

Im übrigen kann die Herstellung des faserverstärkten Verkleidungslements 32 auch mit Hilfe anderer, bei der Herstellung von faser-, insbesondere glasfaserverstärkten Kunststoffteilen allgemein üblicher Verfahren erfolgen. Neben der Handlaminierung und der beschriebenen Vakuuminjektion eignen sich z.B. die Spritz- und Preßtechnik und insbesondere die Anwendung von Prepregs, d.h. von bereits mit wärmehärtbaren Harzen imprägnierten Matten, die durch Warm- oder Kaltpressen weiterverarbeitet werden. Weiterhin ist es möglich, bei dem anhand der Fig. 10 und 11 beschriebenen Verfahren jeweils mehrere Matten mit unterschiedlichen Eigenschaften zu kombinieren, z.B. Aramidfasermatten für eine gute Stoßsicherung, Glasfasermatten für eine hohe Festigkeit und Vliesmatten zur Erzielung eines guten optischen Aussehens übereinander zu schichten.

Zur Vereinfachung der Herstellung der aus dem Grundkörper 18, den Flußleitelementen 15a, 15b und 16a, 16b sowie der Empfängerspule 10 bestehenden Empfangseinheit ist es nach einem weiteren bevorzugten Ausführungsbeispiel der Erfindung möglich, die Flußleitelemente 15a, 15b und 16a, 16b durch einen Gießvorgang herzustellen. Hierzu wird die Empfängerspule 10 vorzugsweise in der aus Fig. 8 (unterstes Bild) ersichtlichen Weise auf den fertigen Grundkörper 18 aufgelegt, ohne daß vorher einzelne Flußleitelemente 15a, 15b und 16a, 16b eingebracht werden. Die Empfängerspule 10 liegt dann an den Stufen 22b (Fig. 5 und 7) und an den Enden des Mittelstegs 19 an, während die Vertiefungen 20, 23 frei bleiben.

In einem weiteren Verfahrensschritt wird ein flüssiges Gemisch zubereitet, das ein härtbares Gießharz und ein Pulver enthält, das aus einem Material mit hoher Permeabilität besteht. Hierfür kommt insbesondere ein Pulver aus Ferrit, vorzugsweise aus einem Weichferrit zur Anwendung. Die Herstellung dieses Gemisches kann natürlich auch bereits vor der Herstellung des Grundkörpers 18 und/oder vor dem Einlegen der Empfängerspule 10 in diesen erfolgen.

Das fertige Gemisch, das vorzugsweise ein mit einem Härter versehenes Mehrkomponenten-Gießharz enthält, wird nun mit Hilfe nicht dargestellter Gießdüsen in die von der Empfängerspule 10 frei gelassenen Vertiefungen 23 gegossen. Alternativ kann hierfür auch eine über die Länge der Vertiefungen 23 durchlaufende Gießrinne verwendet werden. Das Gießharz dringt beim Gießvorgang nicht nur in die Vertiefungen 23, sondern auch in die zwischen diesen erstreckten, teilweise unterhalb der Empfängerspule 10 liegenden Vertiefungen 20 ein und füllt diese vollständig aus. Der Grundkörper 18 dient hierbei somit als Gießform. Ein Auslaufen des Gießharzes in die Vertiefungen 28 wird durch erhöhte Stege 22a an den seitlichen Enden der Stegreihen vermieden.

Der Gießvorgang wird beendet, wenn der Gießharzspiegel die dritte Ebene 26 (Fig. 7) erreicht hat. Dadurch kann das Gießharz in den zwischen den Teilen 22c der Stege 22 befindlichen Bereichen bis zur Ebene 26 aufsteigen, wie in Fig. 3 durch eine gestrichelte Linie 41 angedeutet ist. Das beeinträchtigt aber nicht die Funktion der Streifen 15a, 15b als Flußleitelemente.

Ein Vorteil des beschriebenen Verfahrens besteht darin, dass ein Formkörper nach Art eines Gitterrahmens entsteht, der die aus Fig. 2 und 3 ersichtlichen Streifen 15a, 15b und Verbindungselemente 16a, 16b mit dem Unterschied enthält, dass diese einstückig hergestellt sind und einen einstückigen, zusammenhängenden Gitterrahmen bilden, der im Grundkörper 18 versenkt angeordnet ist. Besondere Maßnahmen zur Verbindung der Streifen 15a, 15b und Verbindungselemente 16a, 16b sind daher nicht erforderlich. Vorteilhaft ist ferner, dass auch die Empfängerspule 10 bereits in den Grundkörper 18 eingesetzt und durch den Gießvorgang fest in diesem eingebettet ist. Der Grundkörper 18, die Empfängerspule 10 und die Flußleitelemente 15a, 15b, 16a, 16b bilden daher eine komplett vormontierte bzw. vormontierbare Bau- und Empfangseinheit, die als Ganzes in Verkleidung 11 (Fig. 1) des Magnetrückenkastens 6 eingebettet wird. Vorteilhaft ist schließlich auch, daß die gegossenen Flußleitelemente eine größere Duktilität als die sonst verwendeten, als Preßformkörper hergestellten Ferritelemente aufweisen.

Der Grundkörper 18 wird vorzugsweise aus einem Kunststoff, insbesondere einem Schaumstoff wie z. B. Polyurethan mit stark dämpfenden Eigenschaften hergestellt. Alternativ zur spanabhebenden Bearbeitung ist es außerdem möglich, den Grundkörper 18 als Ganzes durch Gießen, Schäumen oder Pressen unter Anwendung eines entsprechenden Formwerkzeugs herzustellen, wobei die Vertiefungen 25, 28 für die Empfängerspule 10 z.B. durch einen entsprechend geformten Verdrängungskörper freigehalten werden können.

Die Erfindung ist nicht auf das beschriebene Ausführungsbeispiel beschränkt, das auf vielfache Weise abgewandelt werden kann. Das gilt insbesondere für die aus Fig. 2 und 3 ersichtliche gitterrahmenförmige Struktur der Flussleitelemente, da diese auch in anderen zweckmäßigen Mustern angeordnet und größer oder kleiner als beschrieben ausgebildet werden können. Vor allem bei Anwendung der anhand der Fig. 5 bis 7 beschriebenen Gießverfahrens kann es vorteilhaft sein, die Flußleitelemente 15a, 15b (Fig. 2) als über die Länge der Empfängerspule 10 durchgehende Platten auszubilden. In diesem Fall könnten die Stege 22 (Fig. 5 bis 7) ganz entfallen und die Vertiefungen 20 in Längsrichtung des Grundkörpers 18 durchgehend ausgebildet werden. Es würde dann z.B. in einem ersten Schritt der ganze untere Raum des Grundkörpers 18 bis zur Ebene 24 (Fig. 6) mit dem Gießharzgemisch ausgefüllt, dann die Empfängerspule 10 eingelegt und abschließend der in Fig. 7 von den Flußleitelementen 16a und 16b eingenommene Raum mit der Gießharzmischung gefüllt. Auch die Form des Verkleidungselements 32 kann eine andere sein, da diese hauptsächlich davon abhängt, ob es mit weiteren Bauelementen od. dgl. versehen werden oder solche abdecken soll. Weiter ist klar, dass die Empfängerspule 10 an geeigneten Stellen mit nicht gezeigten Anschlusskontakten versehen ist und die Vertiefungen 28 (Fig. 4) auch ganz fehlen können, insbesondere wenn es erwünscht ist, die Wicklungsköpfe 10c analog zu DE 10 2004 056 439 A1 nach hinten abzubiegen. In diesem Fall müßte das Verkleidungselement 32 mit entsprechend geformten Seitenteilen versehen werden. Anstelle von Flußleitelementen aus Ferrit könnten auch andere, z.B. aus Weicheisen bestehende Flußleitelemente vorgesehen werden, insbesondere wenn die Energieübertragung bei so niedrigen Frequenzen erfolgt, dass die dadurch auftretenden Verluste tolerierbar sind.

## Patentansprüche

1. Verkleidungselement mit einer in dieses integrierten Empfangseinheit, die eine Empfängerspule (10) zur berührungslosen Übertragung von elektrischer Energie und eine Vielzahl von der Empfängerspule (10) zugeordneten, zur Konzentration der Feldstärke bestimmten Flußleitelementen (15a, 15b; 16a, 16b) enthält, die aus einem Material mit im Vergleich zu Luft hoher Permeabilität bestehen, **dadurch gekennzeichnet, daß** es aus faserverstärktem Kunststoff hergestellt ist, die Empfangseinheit einen zur Positionierung der Flußleitelemente (15a, 15b; 16a, 16b) und der Empfängerspule (10) bestimmten, vorgefertigten Grundkörper (18) enthält und die Empfangseinheit als Ganzes in den faserverstärkten Kunststoff eingebettet ist.

2. Verkleidungselement nach Anspruch 1, **dadurch gekennzeichnet, daß** der Grundkörper (18) mit die Flußleitelemente (15a, 15b; 16a, 16b) aufnehmenden Vertiefungen (20, 23) versehen ist.

3. Verkleidungselement nach Anspruch 1 oder 2, **dadurch gekennzeichnet, daß** der Grundkörper (18) aus einem Kunststoff, insbesondere aus einem dämpfend wirkenden Schaumstoff, besteht.

4. Verkleidungselement nach einem der vorstehenden Ansprüche, **dadurch gekennzeichnet, daß** es eine Außenschale (30) und eine Innenschale (31) enthält und der Grundkörper (18) als Abstandhalter zwischen der Außenschale (30) und der Innenschale (31) angeordnet ist.

5. Verkleidungselement nach Anspruch 4, **dadurch gekennzeichnet, daß** die Außenschale (30) und die Innenschale (31) nur in einem die Empfangseinheit umgebenden Randabschnitt (35a, 36a) miteinander verbunden sind.

6. Verkleidungselement nach einem der vorstehenden Ansprüche, **dadurch gekennzeichnet, daß** die Flußleitelemente (15a, 15b; 16a, 16b) und die Empfängerspule (10) lose in dem Grundkörper (18) angeordnet sind, wobei gegebenenfalls die Flußleitelemente (15a, 15b; 16a, 16b) mit einem Klebstoff vorfixiert sind.

7. Verkleidungselement nach einem der vorstehenden Ansprüche, **dadurch gekennzeichnet, daß** die Empfängerspule (10) zwei mit Abstand angeordnete Längsabschnitte (10a, 10b) und diese verbindende Wicklungsköpfe (10c) aufweist, und daß der Grundkörper (18) einen zur Aufnahme der Empfängerspule (10) bestimmten Raum (25, 28) aufweist, die Stege (22) zur Auflage der Längsabschnitte (10a, 10b) der Empfängerspule (10) eingerichtet sind und der Grundkörper (18) seitlich von den Flußleitelementen (15a, 15b; 16a, 16b) angeordnete Vertiefungen (28) zur Aufnahme der Wicklungsköpfe (10c) enthält.

8. Verkleidungselement nach einem der vorstehenden Ansprüche, **dadurch gekennzeichnet, daß** die Flußleitelemente (15a, 15b; 16a, 16b) aus einem zusammenhängenden Formteil bestehen, das mit dem Grundkörper (18) zu einer komplett vorgefertigten Baueinheit zusammengefaßt ist.

9. Verkleidungselement nach Anspruch 8, **dadurch gekennzeichnet, daß** die Flußleitelemente (15a, 15b; 16a, 16b) aus einem Ferrit enthaltenden Material bestehen.

10. Verkleidungselement nach einem der vorstehenden Ansprüche, **dadurch gekennzeichnet, daß** es einen Kondensatorblock enthält, der mit der Empfängerspule (10) verbunden ist und mit dieser einen Schwingkreis bildet.

11. Verfahren zur Herstellung eines Verkleidungselements (32) mit einer in dieses integrierten Empfangseinheit, die eine Empfängerspule (10) zur berührungslosen Übertragung von elektrischer Energie und eine Vielzahl von der Empfängerspule (10) zugeordneten, zur Konzentration der Feldstärke bestimmten Flußleitelementen (15a, 15b; 16a, 16b) enthält, die aus einem Material mit im Vergleich zu Luft hoher Permeabilität bestehen, **dadurch gekennzeichnet, daß** ein zur Aufnahme und Positionierung der Flußleitelemente (15a, 15b; 16a, 16b) und der Empfängerspule (10) bestimmter Grundkörper (18) hergestellt wird, die Flußleitelemente (15a, 15b; 16a, 16b) und die Empfängerspule (10) in dem Grundkörper (18) angeordnet werden und die dadurch gebildete Empfangseinheit dann mit faserverstärktem Kunststoff umhüllt wird.

12. Verfahren nach Anspruch 11, **dadurch gekennzeichnet, daß** unter Verwendung einer ihre Außenkontur festlegenden Form (34) zunächst eine Außenschale (30) hergestellt, in diese dann die Empfangseinheit eingelegt und dann eine mit der Außenschale (30) fest verbundene, die Empfangseinheit umgebende Innenschale (31) hergestellt wird, wobei die Außenschale (30) in einem separaten Verfahrensschritt hergestellt und als Form verwendet wird, in die die Empfangseinheit eingelegt und dann mit einer mit der Außenschale (30) fest verbundenen Innenschale (31) umhüllt wird, und die Herstellung der Außen- und Innenschale (30, 31) unter Verwendung von mit härtbaren Kunststoff imprägnierten Fasermatten (35, 36) erfolgt.

13. Verfahren nach einem der Ansprüche 11 oder 12, **dadurch gekennzeichnet, daß** die Herstellung der Außen- und/oder Innenschale (30, 31) unter Anwendung von Prepregs erfolgt.

14. Verfahren nach einem der Ansprüche 11-13, **dadurch gekennzeichnet, daß** zusätzlich ein mit der Empfängerspule (10) zu einem Schwingkreis verbundener, abstimmbarer Kondensatorblock mit dem Verkleidungselement (32) verbunden wird.

15. Verfahren nach einem der Ansprüche 11-14, **dadurch gekennzeichnet, daß** der Grundkörper (18) aus einem Kunststoff, insbesondere einem Schaumstoff hergestellt wird.

## Claims

1. A cladding element having a receiving unit integrated therein, which receiving unit comprises a receiver coil (10) for contactless transmission of electrical energy and a plurality of flow conducting elements (15a, 15b; 16a, 16b) that are allocated to the receiver coil (10) and designed to concentrate the field strength, and are made from a material having high permeability compared with air, **characterized in that** it is manufactured from fibre-reinforced plastic, the receiving unit contains a prefabricated base body (18) designed for positioning the flow conducting elements (15a, 15b; 16a, 16b) and receiver coil (10), and the receiver unit as a whole is embedded in the fibre-reinforced plastic.

2. The cladding element according to claim 1, **characterized in that** the base body (18) is furnished with depressions (20, 23) that accommodate the flow conducting elements (15a, 15b; 16a, 16b).

3. The cladding element according to claim 1 or 2, **characterized in that** the base body (18) is made from a plastic, particularly a foam plastic that has a damping effect.

4. The cladding element according to any of the preceding claims, **characterized in that** it comprises an outer shell (30) and an inner shell (31), and the base body (18) is arranged to serve as a spacer between the outer shell (30) and an inner shell (31).

5. The cladding element according to claim 4, **characterized in that** the outer shell (30) and an inner shell (31) are only connected to one another in a peripheral section (35a, 36a) that surrounds the receiving unit.

6. The cladding element according to any of the preceding claims, **characterized in that** the flow conducting elements (15a, 15b; 16a, 16b) and the receiver coil (10) are arranged without attachment inside the base body (18), although the flow conducting elements (15a, 15b; 16a, 16b) are optionally affixed with an adhesive beforehand where applicable.

7. The cladding element according to any of the preceding claims, **characterized in that** the receiver coil (10) has two longitudinal sections (10a, 10b) arranged at a distance, and end windings (10c) that connect them, and that the base body (18) has a space (25, 28) designed to accommodate the receiver coil (10), the lands (22) are configured for supporting the longitudinal sections (10a, 10b) of the receiving unit (10), and the base body (18) is furnished with depressions (28) arranged on the sides of the flow conducting elements (15a, 15b; 16a, 16b) to accommodate the end windings (10c).

8. The cladding element according to any of the preceding claims, **characterized in that** the flow conducting elements (15a, 15b; 16a, 16b) are made from a continuous moulded part that is combined with the base body (18) to form a complete, prefabricated unit.

9. The cladding element according to claim 8, **characterized in that** the flow conducting elements (15a, 15b; 16a, 16b) are made from a material that contains ferrite.

10. The cladding element according to any of the preceding claims, **characterized in that** it comprises a capacitor block that is connected to the receiving unit (10) and forms a resonant circuit therewith.

11. A method for producing a cladding element (32) having a receiving unit integrated therein, which receiving unit comprises a receiver coil (10) for contactless transmission of electrical energy and a plurality of flow conducting elements (15a, 15b; 16a, 16b) that are allocated to the receiver coil (10) and designed to concentrate the field strength, and are made from a material having high permeability compared with air, **characterized in that** a base body (18) for accommodating and positioning the flow conducting elements (15a, 15b; 16a, 16b) and the receiver coil (10) is manufactured, the flow conducting elements (15a, 15b; 16a, 16b) and the receiver coil (10) are arranged in the base body (18), and the receiving unit created thereby is then encased in fibre-reinforced plastic.

12. The method according to claim 11, **characterized in that** first an outer shell (30) is produced using a mould (34) that defines the outer contour thereof, then the receiving unit is placed therein, and then an inner shell (31) that surrounds the receiving unit and is permanently connected to the outer shell (30) is produced, wherein the outer shell (30) is produced in a separate method step and is used as a mould into which the receiving unit is placed and then encased in an inner shell (31) that is permanently attached to the outer shell (30), and the inner and outer shells (30, 31) are produced using fibre mats (35, 36) that are impregnated with curable plastic.

13. The method according to either of claims 11 or 12, **characterized in that** the inner and/or outer shells (30, 31) are produced using prepregs.

14. The method according to any claims 11 to 13, **characterized in that** a tunable capacitor block that is connected to the receiver coil (10) to form a resonant circuit is also connected to the cladding element (32).

15. The method according to any claims 11 to 14, **characterized in that** the base body (18) is manufactured from a plastic, particularly a foam plastic.

## Revendications

1. Élément d'habillage avec une unité de réception intégrée dans celui-ci, comprenant une bobine réceptrice (10) pour la transmission sans contact de l'énergie électrique, et une pluralité d'éléments conducteurs de flux (15a, 15b ; 16a, 16b) attribués à la bobine réceptrice (10), définis pour la concentration de l'intensité de champ, et constitués d'un matériau hautement perméable par rapport à l'air, **caractérisé en ce qu'**il est réalisé à partir d'une matière plastique renforcée par fibres, l'unité de réception comprend un corps de base (18) préfabriqué, conçu pour le positionnement des éléments conducteurs de flux (15a, 15b ; 16a, 16b) et de la bobine réceptrice (10), et l'unité de réception est entièrement enrobée dans la matière plastique renforcée par fibres.

2. Élément d'habillage selon la revendication 1, **caractérisé en ce que** le corps de base (18) est pourvu de renfoncements (20, 23) accueillant les éléments conducteurs de flux (15a, 15b ; 16a, 16b).

3. Élément d'habillage selon la revendication 1 ou 2, **caractérisé en ce que** le corps de base (18) est constitué d'une matière plastique, en particulier d'une mousse agissant comme un amortisseur.

4. Élément d'habillage selon l'une des revendications précédentes, **caractérisé en ce qu'**il comprend une coque extérieure (30) et une coque intérieure (31), et le corps de base (18) est disposé comme élément d'espacement entre la coque extérieure (30) et la coque intérieure (31).

5. Élément d'habillage selon la revendication 4, **caractérisé en ce que** la coque extérieure (30) et la coque intérieure (31) ne sont reliées entre elles que dans une section de bord (35a, 36a) entourant l'unité de réception.

6. Élément d'habillage selon l'une des revendications précédentes, **caractérisé en ce que** les éléments conducteurs de flux (15a, 15b ; 16a, 16b) et la bobine réceptrice (10) sont installés librement dans le corps de base (18), les éléments conducteurs de flux (15a, 15b ; 16a, 16b) pouvant le cas échant être préfixés avec une colle.

7. Élément d'habillage selon l'une des revendications précédentes, **caractérisé en ce que** la bobine réceptrice (10) comporte deux sections longitudinales (10a, 10b) espacées et des têtes d'enroulement (10c) reliant celles-ci, et **en ce que** le corps de base (18) comporte un espace (25, 28) défini pour la réception de la bobine réceptrice (10), des parties de liaison (22) sont conçues pour l'appui des sections longitudinales (10a, 10b) de la bobine réceptrice (10), et le corps de base (18) comprend des renfoncement (28) sur le côté des éléments conducteurs de flux (15a, 15b ; 16a, 16b), pour la réception des têtes d'enroulement (10c).

8. Élément d'habillage selon l'une des revendications précédentes, **caractérisé en ce que** les éléments conducteurs de flux (15a, 15b ; 16a, 16b) sont constitués d'une pièce moulée solidarisée, assemblée avec le corps de base (18) en une unité de construction entièrement préfabriquée.

9. Élément d'habillage selon la revendication 8, **caractérisé en ce que** les éléments conducteurs de flux (15a, 15b ; 16a, 16b) sont constitués d'un matériau contenant de la ferrite.

10. Élément d'habillage selon l'une des revendications précédentes, **caractérisé en ce qu'**il comprend un bloc de condensateur, relié à la bobine réceptrice (10) et formant un circuit oscillant avec celle-ci.

11. Procédé pour la fabrication d'un élément d'habillage (32) avec une unité de réception intégrée dans celui-ci, comprenant une bobine réceptrice (10) pour la transmission sans contact de l'énergie électrique, et une pluralité d'éléments conducteurs de flux (15a, 15b ; 16a, 16b) attribués à la bobine réceptrice (10), définis pour la concentration de l'intensité de champ, et constitués d'un matériau hautement perméable par rapport à l'air, **caractérisé en ce qu'**un corps de base (18) est fabriqué pour la réception et le positionnement des éléments conducteurs de flux (15a, 15b ; 16a, 16b) et de la bobine réceptrice (10), les éléments conducteurs de flux (15a, 15b ; 16a, 16b) et la bobine réceptrice (10) sont installés dans le corps de base (18), et l'unité de réception ainsi formée est ensuite enrobée dans une matière plastique renforcée par fibres.

12. Procédé selon la revendication 11, **caractérisé en ce qu'**une coque extérieure (30) est tout d'abord fabriquée en utilisant un moule (34) définissant son contour extérieur, l'unité de réception est ensuite disposée dans celle-ci, puis une coque intérieure (31) entourant l'unité de réception et reliée fixement à la coque extérieure (30) est fabriquée, dans lequel la coque extérieure (30) est fabriquée dans une étape de procédé séparée et utilisée comme moule dans lequel l'unité de réception est installée puis entourée d'une coque intérieure (31) reliée fixement avec la coque extérieure (30), et la fabrication de la coque extérieure et de la coque intérieure (30, 31) est effectuée en utilisant des tapis de fibres (35, 36) imprégnés d'une matière plastique durcissable.

13. Procédé selon l'une des revendications 11 ou 12, **caractérisé en ce que** la fabrication de la coque extérieure et de la coque intérieure (30, 31) est effectuée à l'aide d'éléments préimprégnés.

14. Procédé selon l'une des revendications 11-13, **caractérisé en ce qu'**un bloc de condensateur, susceptible d'être adapté et assemblé avec la bobine réceptrice (10) en un circuit oscillant, est en outre relié à l'élément d'habillage (32).

15. Procédé selon l'une des revendications 11-14, **caractérisé en ce que** le corps de base (18) est fabriqué à partir d'une matière plastique, en particulier d'une mousse.
